# EUROPEAN PATENT APPLICATION

(11) **EP 2 450 838 A1**
(43) Date of publication of application: **09.05.2012**
(21) Application number: 10306228.7
(22) Date of filing: 08.11.2010
(51) Int. Cl.: G06K 19/077

(54) **Smartcard with variable thickness**

(71) Applicant: Gemalto SA, 92190 Meudon (FR)
(72) Inventor: Foesser, Christophe, 92197, MEUDON (FR)
(74) Representative: Cour, Pierre

(57) **Abstract**

The invention provides a smartcard (₁) comprising a smartcard body (₁₀) and on a side of the said smartcard body (₁₀) an electronic chip (3) with an electronic contact area (30), wherein said smartcard (i) also comprises a thickness compensation mean (5) formed by a removable layer placed on the smartcard body (10), at the opposite side of the electronic contact area (30).

## Description

The present invention relates to a smartcard compatible with an adaptor device.

More particularly, the invention relates to SIM cards. In particular, the invention relates to SIM cards of second generation form factor (2ff), known as mini-SIM format, and SIM cards of third generation form factor (3ff), also known as micro SIM. Some SIM cards support near field communication (NFC) through mobile phones that implement such communication channel. For using NFC services with no-compatible phones, an NFC adaptor device is required. In addition the use of a 3ff SIM card in a 2ff compatible phone also requires a 3ff/2ff adaptor device.

Near-field communication relates to communication using electromagnetic field in very short distance. As an example, ISO 14443 is a standard that defines some Near-Field Communication (NFC) between a smartcard and a reader. NFC is commonly used for physical access to buildings or to transportation network and also for payment.

Today, there is a wish to reduce the number of smartcards by using multi-application cards. This also enables to enlarge the numbers of services that may be provided by the card provider. Today, mobile phone operators want to include some payment means in the mobile phones supported by the SIM card which is secured like a banking card. The basic idea consists in using the phone for small payment operation and/or for accessing transportation network.

For this purpose, the European Telecommunication Standard Institute (ETSI) has adopted to include a contactless interface of a NFC type into the mobile phone for communicating with the Subscriber Identity Module (SIM) card by means of a Single Wire Protocol (SWP). For more information regarding SWP, the man of the art can have a look on (thank to identify the standard) The NFC interface of the phone can be used even if the mobile phone is powered off. For implementing the service, it is necessary to have an adapted smartcard together with an adapted mobile phone.

On the smartcard side, the smart card must support an additional communication interface and which is already done for several smartcard chips and all the mobile phone operators can be now supplied with the corresponding smartcards.

On the mobile phone side, it will take much more time for having all handset types including the NFC interface. A final user shall change mobile if he wants to implement the NFC services and this overcost for the final user may delay the full deployment of these new services. In addition, handset manufacturers will not change all their models at a same time. It is also possible that some low-end handset will never include the NFC and SWP interfaces for cost reason.

It is known to provide an adaptor device to be inserted inside the handset and connected to the SIM card for replacing the NFC interface of the handset. Such an adaptor is for example describes in EP With such adaptor, any handset can be used with a smartcard supporting SWP for enabling NFC services.

The smartcard thickness is standardized, and handsets are designed for that standardized size and thickness. By adding the adaptor device, the smartcard thickness increase and some problem or incompatibility with some handset for smartcard insertion may appear. Another problem may be that the increase of the smartcard thickness could put some stress on the electronic contacts between the smartcard and the phone.

The problem is the same if the smartcard is a 3ff format smartcard placed in a 2ff compatible handset with a 3ff-2ff adaptor device. Such an adaptor device has a 2ff to be placed in a 2ff compatible handset and this adaptor device also comprises a compartment adapted to receive a 3ff smartcard. To hold the 3ff smartcard, the compartment of the 3ff-2ff adaptor device has a bottom layer, preventing the 3ff smartcard to pass through the compartment. This bottom layer increases the thickness of the smartcard and as above, some problems or incompatibility with some handset for smartcard insertion may appear.

One goal of the invention is to provide a smartcard functioning without mechanical stress and a constant thickness whatever an adaptor device is present or not.

The invention provides a smartcard, comprising a smartcard body and on a side of the said smartcard body an electronic chip with an electronic contact area, wherein said smartcard also comprises a thickness compensation mean formed by a removable layer placed on the smartcard body, at the opposite side of the electronic contact area.

According to an aspect of the invention, the removable layer is a sticker sticking on the opposite side of the electronic contact area.

According to another aspect of the invention, the removable layer thickness is the same as the smartcard connector thickness of a contactless adaptor device.

According to another aspect of the invention, the removable layer thickness is the same as the bottom layer of the compartment of a third to second generation form factor adaptor device.

According to another aspect of the invention, the smartcard is a second generation form factor smartcard.

According to another aspect of the invention, wherein the smartcard is a third generation form factor smartcard.

The advantage of the present invention will become apparent from the following description with reference to the accompanying drawings, in which:
- Figure 1 is a schematic cross section of a smartcard according to a first configuration,
- Figure 2 is a schematic cross section of a smartcard according to a transitory configuration,
- Figure 3 is a schematic cross section of a smartcard according to a second configuration.
- Figure 4 is a schematic cross section of a smartcard according to a second configuration.

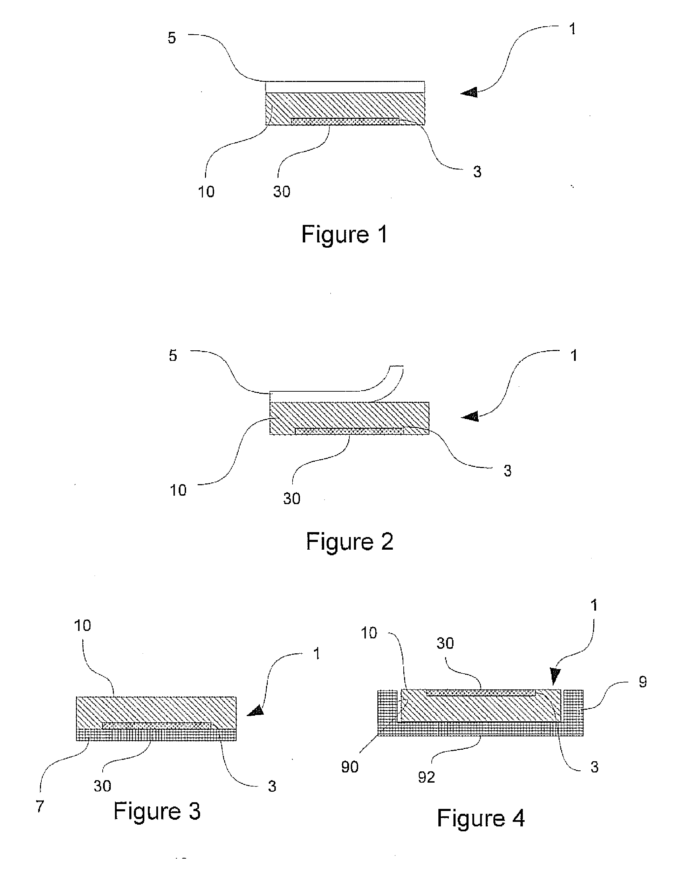

Figure 1 show a schematic cross section of a smartcard i according to a first configuration. In this configuration, the smartcard 1comprises a smartcard body 10 and on a side of the said smartcard body 10 an electronic chip 3 with an electronic contact area 30. At the opposite side of the electronic contact area 30 a compensation mean 5.

The thickness of this first configuration is the same of the standard thickness of a standard smartcard, like a SIM card. This type of smartcard can be a 2ff or a 3ff SIM card for example.

This thickness allow to the smartcard i according to the invention to be use in any handset as a standard smartcard.

When the smartcard i is adapted to an adaptor device 7 like a smartcard connector of a contactless adaptor device or a ₃ff-₂ff adaptor device for example, the thickness of the smartcard 1 increases due to the adaptor device 7 thickness.

As shown on Figure ₂, the compensation mean ₅ can be removed from the side of the smartcard body ₁₀. The withdrawal of the compensation means ₅ allowing a diminution of the smartcard i thickness.

This compensation mean ₅ could be a removable layer like a sticker stick on the opposite side of the electronic contact area ₃.

Figure ₃ show a schematic cross section of a smartcard i according to a second configuration. In this configuration, the smartcard 1 comprises a smartcard body ₁₀ and on a side of the said smartcard body ₁₀ an electronic chip 3 with an electronic contact area ₃₀ and connected to said electronic contact area ₃₀ an adaptor device like a smartcard connector ₇ of a contactless adaptor device.

Figure ₄ also show a schematic cross section of a smartcard i according to a second configuration. In this configuration, the smartcard i comprises a smartcard body ₁₀ and on a side of the said smartcard body ₁₀ an electronic chip ₃ with an electronic contact area ₃₀. Said smartcard 1 is inserted, the opposite side of the electronic contact area ₃₀ first, in the compartment ₉₀ of an adaptor device like a ₃ff-₂ff adaptor device ₉. The smartcard ₁ can't pass through the compartment 90 due to a bottom layer ₉₂.

According to the invention, the compensation mean ₅ thickness is the same as the thickness increase due to the adaptor device ₇ or ₉ thickness to which the smartcard i is connected. For example, in the cases shown on figure ₃ and ₄, the removable layer should have the same thickness of the smartcard connector 7 of a contactless adaptor device as shown on figure ₃, or the same thickness of the bottom layer ₉₂ of the compartment ₉₀ of the ₃ff-₂ff adaptor device ₉ shown on figure ₄.

So the smartcard i thickness in the second configuration is the same of the smartcard 1 thickness in the first configuration, shown on figure i.

These two configurations have the same thickness of a standard smartcard, and can be use in a standard handset.

For example, a standard SIM card thickness is about 8/10 millimeter and an adaptor device ₇ thickness of a contactless adaptor device is about _{1/10} millimeter. In these conditions, a compensation mean ₅ like a sticker thickness should be also _{1/10} millimeter and the smartcard ₁ thickness should be _{7/10} millimeter.

Thus, the smartcard ₁ thickness is 8/10 millimeter in the second configuration and in the first configuration the smartcard ₁ thickness is also 8/10 millimeter.

The smartcard 1 of the invention, after being adapt with a adaptor device ₇ or ₉ in a device like a mobile phone, can be use again in an another device without the adaptor device ₇ or ₉. To increase the smartcard ₁ thickness, the user has to add a new compensation mean 5 on the opposite side of the electronic contact area ₃ of the smartcard, for example by sticking a new sticker.

Thus, the smartcard of the invention permits the use of an adaptor device in a handset without problem or incompatibility with some handset for smartcard insertion, and with less stress on the electronic contacts between the smartcard and the device in which the smartcard is inserted.

## Claims

1. A smartcard (1) comprising a smartcard body (10) and on a side of the said smartcard body (10) an electronic chip (3) with an electronic contact area (30), wherein said smartcard (1) also comprises a thickness compensation mean (5) formed by a removable layer placed on the smartcard body (10), at the opposite side of the electronic contact area (30).

2. The smartcard (1) of claim 1, wherein the removable layer is a sticker sticking on the opposite side of the electronic contact area (3).

3. The smartcard (1) of claim 1, wherein the removable layer thickness is the same as the smartcard connector (7) thickness of a contactless adaptor device.

4. The smartcard (1) of claim 1, wherein the removable layer thickness is the same as the bottom layer (92) of the compartment (90) of a third to second generation form factor adaptor device (9).

5. The smartcard (1) of claim 1, wherein the smartcard (1) is a second generation form factor smartcard.

6. The smartcard (1) of claim 1, wherein the smartcard (1) is a third generation form factor smartcard.
